# EUROPÄISCHE PATENTANMELDUNG

(11) **EP 4 375 476 A1**
(43) Veröffentlichungstag der Anmeldung: **29.05.2024**
(21) Anmeldenummer: 22208883.3
(22) Anmeldetag: 22.11.2022
(51) Int. Cl.: E21B 10/44, B23B 51/02

(54) **GESTEINSBOHRER MIT FÜNF SCHNEIDEN**

(71) Anmelder: Hilti Aktiengesellschaft, 9494 Schaan (LI)
(72) Erfinder: Meierhofer, Markus, 9472 Grabs (CH)
(74) Vertreter: Hilti Aktiengesellschaft Corporate Intellectual Property

(57) **Zusammenfassung**

Die Erfindung betrifft einen **Gesteinsbohrer** (10), umfassend einen Schaftabschnitt (12), an den einenends ein Einsteckabschnitt (16) zur Verbindung mit einer Werkzeugaufnahme einer Bohrwerkzeugmaschine und anderenends ein Bohrkopf (18) zur Bearbeitung eines Untergrundes ausgebildet ist. Der Bohrkopf (18) weist wenigstens eine Schneide (20) mit einem Vorsprung (22) an ihrem äußeren Ende auf, der tangential zur Längsachse (L) von der Schneide (20) wegweist. Der Gesteinsbohrer (10) weist eine hohe Abbauleistung und ein geringes Risiko eines Verklemmens auf.

## Beschreibung

Die Erfindung geht aus von einem Gesteinsbohrer, umfassend einen Schaftabschnitt, an den einenends ein Einsteckabschnitt zur Verbindung mit einer Werkzeugaufnahme einer Bohrwerkzeugmaschine und anderenends ein Bohrkopf zur Bearbeitung eines Untergrundes ausgebildet ist, wobei der Bohrkopf wenigstens eine von einer zentralen Längsachse des Bohrkopfes nach außen verlaufende Schneide aufweist.

Solche Gesteinsbohrer werden üblicherweise verwendet, um Gesteine wie beispielsweise armierten Beton zu bearbeiten, beispielsweise um Löcher in das Gestein zu bohren.

Dabei kann es vorkommen, dass sich der Gesteinsbohrer im Gestein festsetzt. Dies geschieht besonders häufig, wenn der Gesteinsbohrer mit einer Armierung eines armierten Gesteins in Kontakt kommt.

Schädigungen an einer Werkzeugmaschine, in der der Gesteinsbohrer aufgenommen ist, und / oder eines Benutzers der Werkzeugmaschine beziehungsweise des Gesteinsbohrers können die Folge sein.

Aufgabe der vorliegenden Erfindungen ist es daher, einen Gesteinsbohrer anzubieten, der eine besonders sichere Bearbeitung von Gestein erlaubt. Wünschenswert ist es darüber hinaus, wenn der Gesteinsbohrer hohe Bohrleistungen ermöglicht.

Gelöst wird die Aufgabe durch einen Gesteinsbohrer, umfassend einen Schaftabschnitt, an den einenends ein Einsteckabschnitt zur Verbindung mit einer Werkzeugaufnahme einer Bohrwerkzeugmaschine und anderenends ein Bohrkopf zur Bearbeitung eines Untergrundes ausgebildet ist, wobei der Bohrkopf wenigstens eine von einer zentralen Längsachse des Bohrkopfes nach außen verlaufende Schneide aufweist, wobei die Schneide an ihrem äußeren Ende einen tangential zur Längsachse von dieser Schneide wegweisenden Vorsprung aufweist.

Dem liegt der Gedanke zugrunde, dass ein Gesteinsbohrer insbesondere dann in einem armierten Gestein stecken bleibt, wenn sich eine Armierung zwischen Schneiden des Bohrkopfes verklemmen kann. Daher ist es günstig, Zwischenräume zwischen den Schneiden möglichst weiträumig auszufüllen oder die Zwischenräume insgesamt möglichst klein zu halten.

Insbesondere kann ein Zwischenraum durch den Vorsprung oder die Vorsprünge verkleinert sein. Der Vorsprung oder die Vorsprünge können dabei ohne Einfluss auf die effektive Kontaktfläche und damit die spezifische Schlagleistung und die sich daraus ergebende Abbauleistung sein.

Durch eine höhere Anzahl an Schneiden lässt sich der Gesteinsbohrer während eines Bohrvorgangs stabiler führen. Das Risiko eines Verklemmens einer Armierung zwischen den dann enger zueinander ausgebildeten Schneiden kann weiter reduziert werden.

Daher kann es grundsätzlich günstig sein, eine Vielzahl von Schneiden am Bohrkopf vorzusehen. Mit der Anzahl der Schneide erhöht sich jedoch auch eine Kontaktfläche zwischen dem Bohrkopf und dem Untergrund, also beispielsweise dem armierten Gestein. Dadurch verringert sich bei gleicher Schlagenergie pro Schlag der Werkzeugmaschine, in den dieser Gesteinsbohrer aufgenommen ist, und bei gleicher Schlagfrequenz die spezifische, auf die Kontaktfläche bezogene Schlagleistung. Die Abbauleistung des Gesteinsbohrers kann sich daher mit steigender Anzahl der Schneiden verschlechtern.

Aufgrund bisheriger Erfahrungen hat sich gezeigt, das sich eine günstige Balance insbesondere zwischen der Neigung zum Verklemmen, der Stabilität und der Abbauleistung ergibt, wenn der Bohrkopf wenigstens drei, vorzugsweise höchstens sieben, besonderes bevorzugt fünf, von einer zentralen Längsachse des Bohrkopfes nach außen verlaufende Schneiden aufweist.

Jede der Schneiden kann an ihrem äußeren Ende einen tangential zur Längsachse von der jeweiligen Schneide wegweisenden Vorsprung aufweisen, sodass Zwischenräume zwischen benachbarten Schneiden weiter verkleinert sein können.

Somit ermöglicht der Gesteinsbohrer Bohrarbeiten ohne oder allenfalls mit äußerst geringem Risiko eines Verklemmens und damit ein besonders sicheres Arbeiten.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert. Insbesondere werden anhand der Zeichnung auch die in den abhängigen Ansprüchen beschriebenen Merkmale näher erläutert.

**Es zeigen:**
- Fig. 1: einen Gesteinsbohrer in einer Seitenansicht,
- Fig. 2: den Gesteinsbohrer in einer perspektivischen Ansicht,
- Fig. 3: den Gesteinsbohrer in einer weiteren perspektivischen Ansicht,
- Fig. 4: eine Draufsicht auf einen Bohrkopf des Gesteinsbohrers,
- Fig. 5: eine perspektivische Ansicht auf einen vorderen Abschnitt des Gesteinsbohrers und insbesondere des Bohrkopfs,
- Fig. 6 bis 9: mehrere Seitenansichten auf einen Teilabschnitt eines Schaftabschnitts und auf einen an diese angrenzenden Bohrkopf eines Gesteinsbohrers und
- Fig. 10: eine Seitenansicht entsprechend der Ansicht gemäß Fig. 6 eines Gesteinsbohrers.

In der nachfolgenden Beschreibung der Figuren werden zur Erleichterung des Verständnisses der Erfindung für gleiche oder sich funktional entsprechende Elemente jeweils die gleichen Bezugszeichen verwendet.

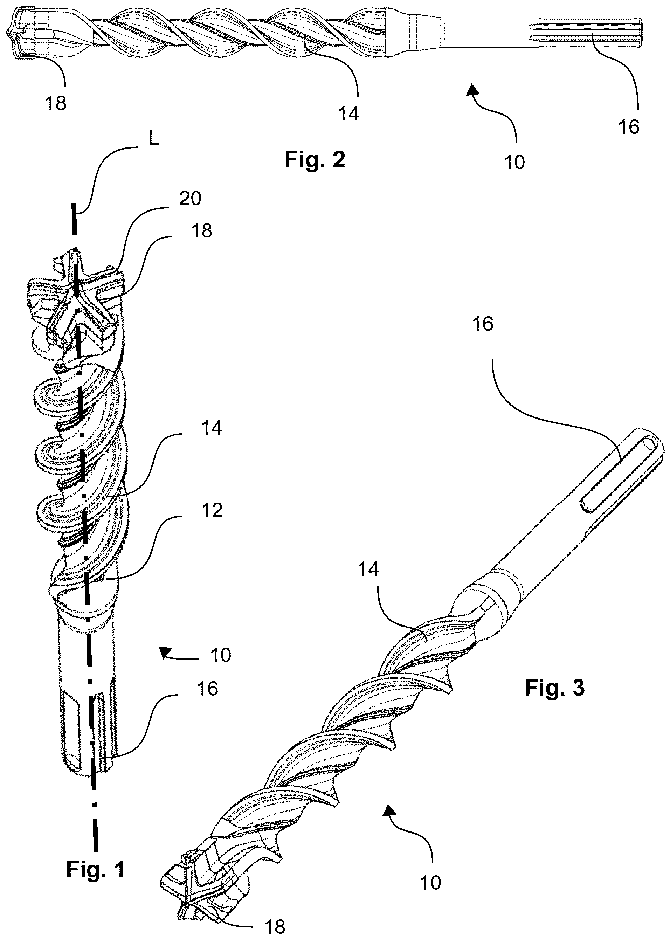

**Fig. 1** zeigt einen Gesteinsbohrer **10** in einer Seitenansicht. Der Gesteinsbohrer 10 umfasst einen Schaftabschnitt **12.** Am Schaftabschnitt 12 ist eine Förderwendel **14** ausgebildet.

Einenends des Schaftabschnitts 12 ist ein Einsteckabschnitt **16** zur Verbindung mit einer Werkzeugaufnahme einer Bohrwerkzeugmaschine (in Fig. 1 nicht abgebildet) und anderenends ist ein Bohrkopf **18** zur Bearbeitung eines Untergrundes (in Fig. 1 nicht abgebildet), beispielsweise eines armierten Gesteins, ausgebildet.

Der Einsteckabschnitt 16 ist z. B. nach Art eines allgemein als "SDS-Max" bekannten Einsteckendes ausgebildet. Denkbar ist auch, dass das Einsteckende nach Art eines sogenannten "SDS Plus"- oder eines ähnlichen standardisierten Einsteckendes ausgebildet ist.

Die Förderwendel 14 ist als zweigängige Wendel ausgebildet. Alternativ wäre auch denkbar, die Förderwendel als drei-, vier- oder fünfgängige Wendel auszubilden. Eine zweigängige Wendel kann abgebautes Gestein mit einer hohen Transportleistung vom Bohrkopf 18 weg fördern. Sie kann vergleichsweise robust ausgebildet sein und kann dennoch zu akzeptablen Kosten herstellbar sein. Ihre Wendelstege sind hinreichend weit voneinander entfernt, sodass selbst größere Korngrößen des abgebauten Gesteins ohne zu verklemmen entlang der Förderwendel förderbar sind. Eine als zweigängige Wendel ausgebildete Förderwendel 14 hat sich somit als besonders vorteilhaft erwiesen.

Der Bohrkopf 18 weist fünf Schneiden **20** auf. Aus Gründen der Übersichtlichkeit ist von den fünf Schneiden lediglich eine Schneide 20 mit einem Bezugszeichen markiert.

Die Schneiden 20 verlaufen von einer zentralen Längsachse **L** des Bohrkopfes 18 nach außen. Es versteht sich, dass der Gesteinsbohrer 10 auch schlagend, insbesondere entlang der Längsachse L, betreibbar ist, um Gestein abzubauen. Insgesamt kann somit der Gesteinsbohrer 10 zum Abbau von Gestein drehschlagend betrieben werden.

Der Gesteinsbohrer 10 kann für Bohrlöcher mit einem Durchmesser von mindestens 10 mm und / oder höchstens 32 mm ausgebildet sein, sodass trotz der nachfolgend noch näher beschriebenen besonderen Geometrie überall eine hinreichende Materialstärke gewährleistet werden kann.

Auch kann das Gewicht und damit die mit diesem verbundene Trägheit bei einer solchen Dimensionierung noch in einem für einen drehschlagenden Abbau von Gestein geeigneten Bereich bleiben.

Vorzugsweise weist der Bohrkopf 18 ein bruchfesteres Material auf als der Schaftabschnitt 12. Während der Schaftabschnitt 12 beispielsweise einen Stahl aufweisen kann, kann der Bohrkopf ein Hartmetall, beispielsweise ein Wolfram-basiertes Hartmetall, aufweisen.

**Fig. 2** und **Fig. 3** zeigen weitere perspektivische Ansichten des Gesteinsbohrers 10, sodass insbesondere die Förderwendel 14, der Einsteckabschnitt 16 und der Bohrkopf 18 zusätzlich aus weiteren Blickrichtungen erkennbar sind.

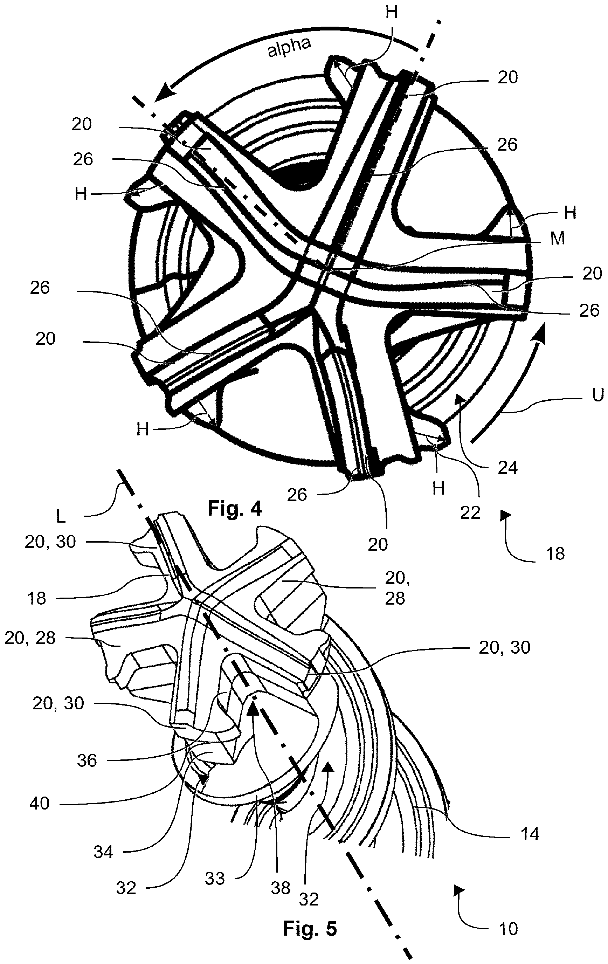

**Fig. 4** zeigt eine Draufsicht auf den Bohrkopf 18. Zu erkennen sind die fünf Schneiden 20.

An ihren äußeren Enden weist jede der Schneiden 20 jeweils einen tangential zur Längsachse L von der jeweiligen Schneide 20 wegweisenden Vorsprung **22** auf. Aus Gründen der Übersichtlichkeit ist auch hier lediglich einer der Vorsprünge 22 mit einem Bezugszeichen markiert.

Wie beispielsweise anhand von Fig. 4 erkennbar ist, weisen die tangential zur Längsachse L von der jeweiligen Schneide 20 wegweisenden Vorsprünge **22** jeweils wenigstens eine Hauptrichtung **H** auf, die zumindest eine überwiegende, in eine tangentiale Richtung weisende Richtungskomponente aufweist.

Die Vorsprünge 22 weisen entlang einer Umfangsrichtung **U.** Die Umfangsrichtung U entspricht der Arbeitsdrehrichtung des Gesteinsbohrers 10, in die er sich zum Abbau des Untergrundes dreht. Somit laufen die Vorsprünge 22 während des Abbaus von Gestein ihren zugehörigen Schneiden 20 jeweils etwas voraus.

Denkbar ist alternativ oder ergänzend auch, dass wenigstens einer der Vorsprünge 22 gegen die Umfangsrichtung U weist, also somit seiner zugehörigen Schneide 20 jeweils etwas nachläuft.

Insbesondere kann bei alternativen Gesteinsbohrern wenigstens eine der Schneiden 20 mit vorlaufenden und mit nachlaufenden Vorsprüngen 22 ausgestattet sein.

Durch die Vorsprünge 22 werden Zwischenräume **24**, von denen in Fig. 4 wiederum beispielhaft lediglich einer mit einem Bezugszeichen markiert ist, zwischen jeweils benachbarten Schneiden 20 verkleinert.

Gleichzeitig verbleibt Freiraum in den Zwischenräumen 24, sodass zerkleinertes Material von dort zur Förderwendel 14 gelangen kann.

Die Schneiden 20 laufen drehsymmetrisch, vorzugsweise unter einem Winkel **alpha** von zwischen 70° und 80°, insbesondere 72°, aus einem Mittelpunkt **M** des Bohrkopfes 18, also quer zur Längsachse L (siehe Fig. 1), heraus. Durch die drehsymmetrische Anordnung ergibt sich eine besonders gleichmäßige Verteilung des Kontakts des Bohrkopfes 18 mit dem Untergrund über den Querschnitt des Bohrkopfes 18 hinweg. Der Gesteinsbohrer 10 lässt sich dadurch sehr stabil in den zu bearbeitenden Untergrund hineinführen.

Die Schneiden 20 weisen Schneidkanten **26** auf. Die Schneidkanten 26 verlaufen mit Ausnahme einer Schneidkante 26, in Fig. 4 also bis auf die Schneidkante 26 auf ca. 1 Uhr, d. h. die schräg nach rechts oben verläuft, gekrümmt.

Denkbar ist auch, einen alternativen Gesteinsbohrer 10 mit derartigen Schneidkanten 26, jedoch ohne Vorsprünge 22, auszubilden. Ein solcher alternativer Gesteinsbohrer 10 kann ein oder mehrere der vorangehend und / oder nachfolgend beschriebenen Merkmale und / oder in der Zeichnung enthaltene Merkmale, insbesondere mit Ausnahme der Merkmale, die sich auf die Vorsprünge 22 beziehen, aufweisen.

**Fig. 5** zeigt eine weitere perspektivische Ansicht des Gesteinsbohrers 10. Insbesondere ist das Ende des Gesteinsbohrers 10 mit seinem Bohrkopf 18 zu erkennen.

Zwei der fünf Schneiden 20 sind, insbesondere mit ihren freien Enden, gegenüber den ihnen jeweils benachbarten Schneiden 20 nach hinten, d. h. parallel zur Längsachse L in Richtung zur Förderwendel 14, zurückversetzt. Sie bilden Nebenschneiden **28.** Somit schlägt der Bohrkopf 18 hauptsächlich mit den drei verbleibenden Schneiden 20, im Folgenden als Hauptschneiden **30** bezeichnet, auf den zu bearbeitenden Untergrund auf.

Die Nebenschneiden 28 sind senkrecht zur Längsachse L stärker gekrümmt als die Hauptschneiden 30, sodass der Abtransport von Bohrmehl weiter verbessert wird.

Insofern ergibt sich für den Gesteinsbohrer 10 mit seinen fünf Schneiden 20 eine besonders hohe spezifische Schlagleistung, und dadurch eine besonders hohe Abbauleistung.

Neben ihrer oben bereits beschriebenen Stabilisierungsfunktion können die Nebenschneiden 28 insbesondere dann zum Einsatz kommen, wenn der Gesteinsbohrer 10 auf eine Armierung, beispielsweise eine Stahlarmierung, trifft und gegebenenfalls ein Stück weit in diese eintaucht. Dann können die Nebenschneiden 28 den Abbau der Armierung beschleunigen.

Anhand von Fig. 5 ist weiter zu erkennen, dass die freien Enden der Vorsprünge 22 gegenüber ihren Schneiden-seitigen Enden nach hinten, also zur Förderwendel 14 hin, zurückversetzt sind, sodass die Vorsprünge 22 ebenfalls während eines normalen Abbaus von Gestein nicht auf den Untergrund aufschlagen, wodurch die effektive Kontaktfläche zugunsten einer hohen spezifischen Schlagleistung zusätzlich minimiert wird. Zusammen mit Seitenflächen der Schneiden 20 bilden die Vorsprünge 22 auch Gleitflächen, entlang derer zerkleinertes Material zur Förderwendel 14 hingeführt werden kann, sodass der Versatz der freien Enden der Vorsprünge 22 nach hinten auch einen Abtransport des zerkleinerten Materials verbessert.

Weiter ist anhand von Fig. 5 sowie in Verbindung auch mit Fig. 1 bis Fig. 3 zu erkennen, dass die Förderwendel 14 zweigängig ausgebildet ist, um eine hohe Förderleistung zu erreichen.

Schneiden 20, die nicht direkt an eine Wendelwand **33,** von denen in Fig. 5 wiederum aus Darstellungsgründen lediglich eine Wendelwand 33 mit einem Bezugszeichen markiert ist, einer der Wendelgänge **32** der Förderwendel 14 angrenzen, sind von von der Förderwendel 14 abragenden Stützkörpern **34** abgestützt. Die Stützkörper 34 sind unabhängig von den Wendelwänden 33 von der Förderwendel 14 abragend ausgebildet. Bei den fünf Schneiden 20 und der zweigängigen Förderwendel 14 ist somit ein solcher Stützkörper 34 ausgebildet.

Durch die Stützkörper 34 ist es somit möglich, einen Bohrkopf 18 mit einer Anzahl von Schneiden 20 mit einer Förderwendel 14 zu verbinden, die eine von der Anzahl der Schneiden 20 abweichende Anzahl von Wendelwänden 33 aufweist. Insbesondere kann ein Bohrkopf 18 zusammen mit einer ungeradzahligen Anzahl von Schneiden 20 mit einer Förderwendel 14 mit einer geradzahligen Anzahl von Gängen vorgesehen sein. Somit können jeweils für den Bohrkopf 18 besonders vorteilhafte Ausgestaltungen mit besonders vorteilhaften Ausgestaltungen der Förderwendel 14 kombinierbar sein.

Alle Schneiden 20 münden entlang von Wänden **36**, von denen aus Gründen der Übersichtlichkeit wiederum lediglich eine Wand 36 in Fig. 5 mit einem Bezugszeichen versehen ist, in die Förderwendel 14. Die Wände 36 verlaufen parallel zur Längsrichtung L, sodass sich parallel zur Längsrichtung L in die Förderwendel 14 mündende Einleitungsbereiche **38**, von denen wiederum lediglich einer mit einem Bezugszeichen versehen ist, ergeben. Die Einleitungsbereiche 38, und insbesondere die parallel zur Längsrichtung L verlaufenden Wänden 36, dienen zu einem weiter verbesserten Abtransport zerkleinerten Materials.

Vorzugsweise kann der Bohrkopf 18 mithilfe einer metallurgischen Fügezone **40** an den Schaftabschnitt 12 stumpf gefügt sein, um die notwendige Festigkeit der Verbindung sicherzustellen. Die metallurgische Fügezone 40 kann beispielsweise mittels Schweißen oder Löten hergestellt sein.

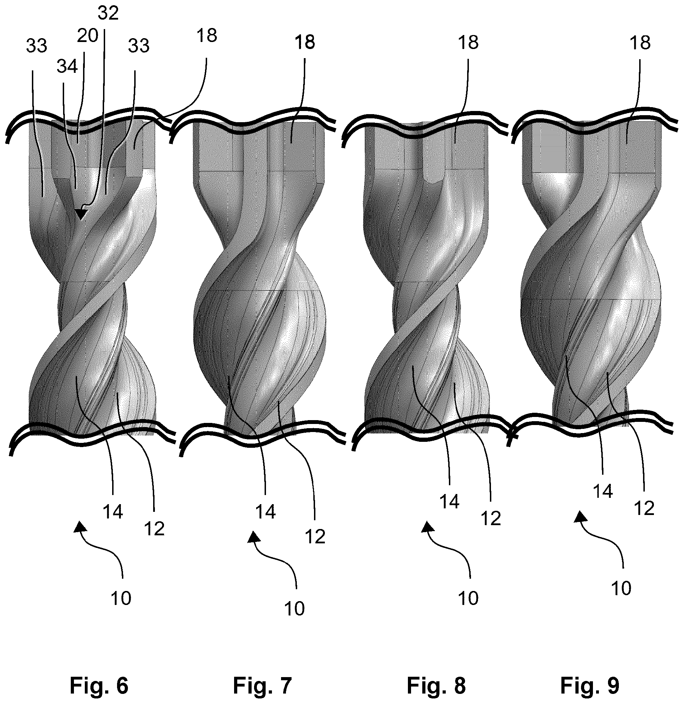

**Fig. 6 bis 9** zeigen mehrere Seitenansichten aus jeweils unterschiedlichen Blickwinkeln auf einen Teilabschnitt eines Schaftabschnitts 12 und auf einen an diese angrenzenden Bohrkopf 18 eines Gesteinsbohrers 10.

Insbesondere anhand von Fig. 6 ist zu erkennen, dass die mit einem Bezugszeichen versehene Schneide 20 auf dem Stützkörper 34 sitzt. Der Stützkörper 34 ist wiederum abragend von der Förderwendel 14 ausgebildet. Er sitzt zwischen zwei Wendelwänden 33 eines der Wendelgänge 32.

Eine solche Stützung von Schneiden 20 durch Stützkörper 34 kann sowohl bei Schneiden 20 mit einem tangentialen Vorsprung als auch bei Schneiden 20 ohne einen tangentialen Vorsprung vorgesehen sein. Beispielhaft sind daher in Fig. 6 bis Fig. 9 Schneiden 20 ohne einen tangentialen Vorsprung dargestellt.

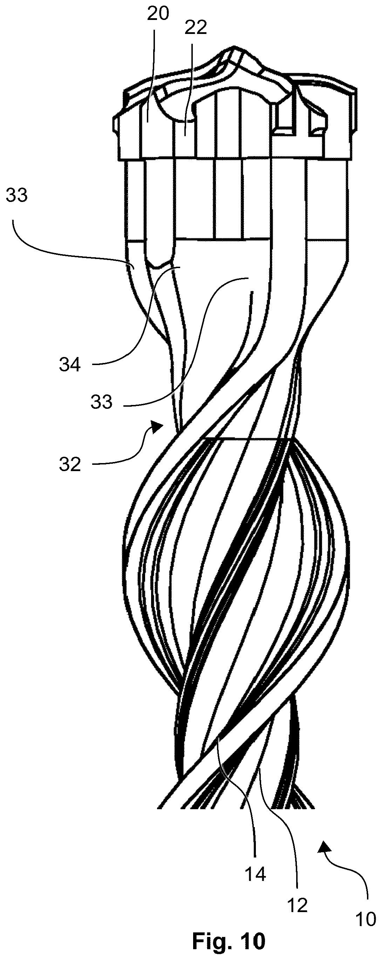

Fig. 10 zeigt in einer Fig. 6 entsprechenden Ansicht einen Teilabschnitt eines Gesteinsbohrers 10, bei dem Schneiden 20 einen tangentialen Vorsprung 22 aufweisen, wobei wiederum lediglich eine Schneide 20 und der dazugehörige Vorsprung 22 mit Bezugszeichen markiert sind.

### Bezugszeichenliste

- 10: Gesteinsbohrer
- 12: Schaftabschnitt
- 14: Förderwendel
- 16: Einsteckabschnitt
- 18: Bohrkopf
- 20: Schneide
- 22: Vorsprung
- 24: Zwischenraum
- 26: Schneidkante
- 28: Nebenschneide
- 30: Hauptschneide
- 32: Wendelgang
- 33: Wendelwand
- 34: Stützkörper
- 36: Wand
- 38: Einleitungsbereich
- 40: metallurgische Fügezone
- H: Hauptrichtung
- L: Längsachse
- M: Mittelpunkt
- U: Umfangsrichtung
- alpha: Winkel

## Patentansprüche

1. **Gesteinsbohrer (10)**, umfassend einen Schaftabschnitt (12), an den einenends ein Einsteckabschnitt (16) zur Verbindung mit einer Werkzeugaufnahme einer Bohrwerkzeugmaschine und anderenends ein Bohrkopf (18) zur Bearbeitung eines Untergrundes ausgebildet ist, wobei der Bohrkopf (18) wenigstens eine von einer zentralen Längsachse (L) des Bohrkopfes (18) nach außen verlaufende Schneide (20) aufweist,
**dadurch gekennzeichnet,**
**dass** die Schneide (20) an ihrem äußeren Ende einen tangential zur Längsachse (L) von dieser Schneide (20) wegweisenden Vorsprung (22) aufweist.

2. Gesteinsbohrer nach dem vorhergehenden Anspruch, **dadurch gekennzeichnet, dass** der Bohrkopf (18) wenigstens drei, vorzugsweise höchstens sieben, besonderes bevorzugt fünf, von einer zentralen Längsachse (L) des Bohrkopfes (18) nach außen verlaufende Schneiden (20) aufweist.

3. Gesteinsbohrer nach einem der vorhergehenden Ansprüche, **dadurch gekennzeichnet, dass** jede der Schneiden (20) an ihrem äußeren Ende einen tangential zur Längsachse (L) von der jeweiligen Schneide (20) wegweisenden Vorsprung (22) aufweist.

4. Gesteinsbohrer nach einem der vorhergehenden Ansprüche, **dadurch gekennzeichnet, dass** der Vorsprung (22) oder die Vorsprünge (22) entlang einer Umfangsrichtung (U) weist oder weisen, die einer Arbeitsdrehrichtung des Gesteinsbohrers (10) entspricht.

5. Gesteinsbohrer nach einem der vorherigen Ansprüche, **dadurch gekennzeichnet, dass** die Schneiden (20) drehsymmetrisch, insbesondere unter einem Winkel von 360°/n, mit n als der Anzahl der Schneiden (20), aus einem Mittelpunkt (M) des Bohrkopfes (18) herauslaufen.

6. Gesteinsbohrer nach einem der vorherigen Ansprüche, **dadurch gekennzeichnet, dass** wenigstens eine der Schneiden (20), insbesondere zwei der Schneiden (20), gegenüber wenigstens einer der ihr benachbarten Schneiden (20), nach hinten, d. h. parallel zur Längsachse (L) in Richtung zum Schaftabschnitt (12), zurückversetzt ist.

7. Gesteinsbohrer nach einem der vorherigen Ansprüche, **dadurch gekennzeichnet, dass** das freie Ende des wenigstens einen Vorsprungs (22) gegenüber dem Schneiden-seitigen Ende dieses Vorsprungs (22) nach hinten zurückversetzt ist.

8. Gesteinsbohrer nach einem der vorherigen Ansprüche, **dadurch gekennzeichnet, dass** am Schaftabschnitt (12) eine zweigängige Förderwendel (14) ausgebildet ist.

9. Gesteinsbohrer nach einem der vorherigen Ansprüche, **dadurch gekennzeichnet, dass** wenigstens eine der Schneiden (20) von einem von der Förderwendel (14) abragenden Stützkörper (34) gestützt ist.

10. Gesteinsbohrer nach einem der vorherigen Ansprüche, **dadurch gekennzeichnet, dass** sich zwischen dem Bohrkopf (18) und dem Schaftabschnitt (12) eine metallurgische Fügezone (40), befindet.

11. Gesteinsbohrer nach einem der vorhergehenden Ansprüche, **dadurch gekennzeichnet, dass** der Bohrkopf (18) einen Durchmesser von höchstens 32 mm aufweist.

12. Gesteinsbohrer nach einem der vorhergehenden Ansprüche, **dadurch gekennzeichnet, dass** der Bohrkopf (18) einen Durchmesser von wenigstens 10 mm aufweist.
